# EUROPEAN PATENT SPECIFICATION

(11) **EP 0 964 595 B1**
(45) Date of publication and mention of the grant of the patent: **07.03.2012**
(21) Application number: 99109695.9
(22) Date of filing: 17.05.1999
(51) Int. Cl.: H04W 24/00

(54) **Evaluation of a channel by handover measurements**
Auswertung eines Kanals durch Weiterreichungsmessungen
Evaluation d'un canal par mesures de transfert

(30) Priority: 10.06.1998 GB 9812407
(43) Date of publication of application: 15.12.1999
(73) Proprietor: Motorola Mobility, Inc., Libertyville, IL 60048 (US)
(72) Inventor: Thomas, Howard John, Cirencester GL7 1EJ (GB); Quirke, Thomas, Swindon, Wiltshire 2N2 2UH (GB); Benn, Howard Peter, Peatmoor, Swindon SN5 5AJ (GB)
(74) Representative: Jepsen, René Pihl

(56) References cited:
- WO-A-94/10792
- WO-A-99/23850

## Description

### Field of the Invention

The present invention relates to a cellular mobile communication network (particularly but not exclusively a GSM or DCS 1800 mobile communication network) and to a method of operation of such a network.

### Background of the Invention

In a cellular mobile communication system such as the Global System for Mobile Communication (GSM),each of the mobile stations communicate with a typically fixed base station. Communication from the mobile station to the base station is known as uplink and communication from the base station to the mobile station is known as downlink. The total coverage area of the system is divided into a number of separate cells each covered by a single base station. The cells are typically geographically distinct with an overlapping coverage area with neighbouring cells. As a mobile station moves from the coverage area of one cell to the coverage area of another cell, the communication link will change from being between the mobile station and the base station of the first cell to being between the mobile station and the base station of the second cell. This is known as a handover. Specifically, some cells may lie completely within the coverage of other larger cells.

Patent Cooperation Treaty patent application WO 99/23850 discloses and example of a telecommunications system and method for determining optimal target Base Transceiver Stations (BTSs) for handovers.

All base stations are interconnected by a fixed network. This fixed network comprises communication lines, switches, interfaces to other communication networks, various controllers required for operating the network and the base stations themselves. A call from a mobile station is routed through this network to the destination specific for this call. If the call is between two mobile stations of the same communication system the call will be routed through the network to the base station of the cell in which the other mobile station is currently. A connection is thus established between the two serving cells through the network. Alternatively, if the call is between a mobile station and a telephone connected to the Public Switched Telephone Network (PSTN) the call is routed from the serving base station to the interface between the cellular mobile communication system and the PSTN. It is then routed from the interface to the telephone by the PSTN.

As demand for mobile radio services increases, there is a requirement to provide ever greater capacity. One way to provide this extra capacity is to reduce cell size so that the available frequency band can be reused to a greater extent. However, increasing the number of cells makes frequency planning more complex and can impose other constraints on mobile stations as a result of their radio visibility from large numbers of cells, not just the nearest neighbours of their serving cell.

The use of a simulcast control channel over a group of cells has been proposed to lessen the frequency planning problem; individual cell sites are assigned carriers as needed on a dynamic basis. However, handover between cells then becomes more difficult as each cell is no longer associated with a unique control channel.

A simulcast system is one in which all the cells within the network transmit an identical signal, at the same frequency, at all times. This signal contains control information and is used as a beacon by external networks to determine relative signal strength. Additionally, each cell within the simulcast system transmits a second frequency upon which traffic can be relayed. The second frequency is different from cell to cell although it may be reused if there is sufficient distance to mitigate interference. As a mobile is likely to remain within this simulcast system during the period of the call and the simulcast carrier effectively creates a single larger umbrella cell, very few intercell handovers (between simulcast calls and external cells) will be required. Consequently, the majority of handovers will be of the intracellular (between the simulcast cells) type. Since there is a single umbrella cell identification the mobile cannot identify the smaller target cells beneath this umbrella cell: i.e. the handover process cannot be mobile-assisted. Rather than mobiles identifying cells, the cells identify the target mobiles by making measurements of the strength of neighbour uplink traffic. The stronger the neighbour measurement compared to measurements made by other cells the more probable that the observed mobile will handover into that cell.

The present invention is applicable particularly but not exclusively to a simulcast network.

### Summary of the Invention

An object of the present invention is to enable more information to be obtained from the network without substantial modification of a standard cellular network, e.g. a GSM network.

According to a first aspect of the invention, there is provided a method of evaluating a communications channel in accordance with claim 1.

In one embodiment, the radio resource management process can be initiated by the fixed network or the mobile station and a serving cell is preferably selected in dependence upon the evaluation.

The radio resource management process is initiated by a clock signal or in response to the radio conditions.

According to a second feature of the invention, the characteristic of a received signal from the mobile station can be measured by one or more base stations, by one or more mobile stations or by one or more dedicated receivers distinct from the base stations.

In one embodiment, the mobile communication network is a GSM network with a simulcast carrier.

According to a second aspect of the invention, there is provided a cellular mobile communication network in accordance with claim 16.

According to a third aspect of the invention, there is provided a base station in accordance with claim 17.

Preferred features are defined in the dependent claims.

### Brief Description of the Drawings

Preferred embodiments are described below by way of example only with reference to Figures 1 to 3 of the accompanying drawings, wherein:
Figure 1 is a schematic diagram of a GSM mobile communication network in accordance with this invention, employing a simulcast BCCH carrier which extends over an array of cells;
Figure 2 is a schematic flow diagram illustrating a method of call setup in accordance with one aspect of the invention; and
Figure 3 is a schematic flow diagram illustrating a method of call handover in accordance with another aspect of the invention.

### Description of a Preferred Embodiment

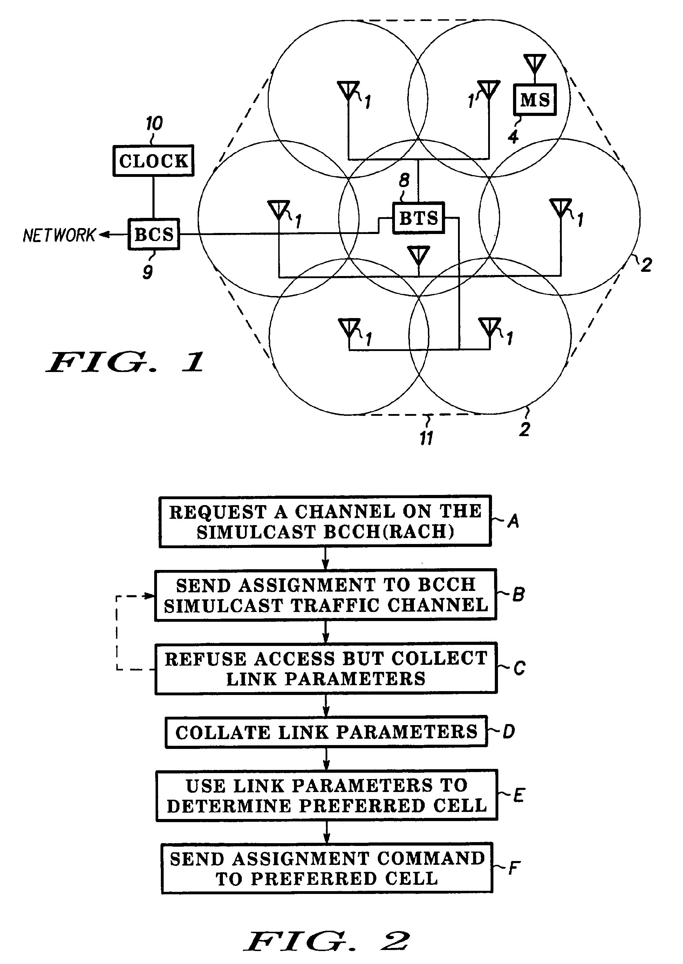

Referring to Figure 1, the GSM network illustrated comprises a group of picocellular heads 1 coupled to a common base transceiver station (BTS) 8 and defining respective picocells 2, each picocell 2 representing the coverage of a respective carrier signal associated with each picocellular head. Each carrier signal will typically have a different frequency from those of at least its nearest neighbouring picocells.

A further simulcast carrier is transmitted from each picocellular head 1 and extends over all the above picocells as illustrated at 11.

BTS 8 is in turn connected by a fixed communications link to a base station controller (BSC) 9 which is connected to the remainder of the network in a standard manner (not shown).

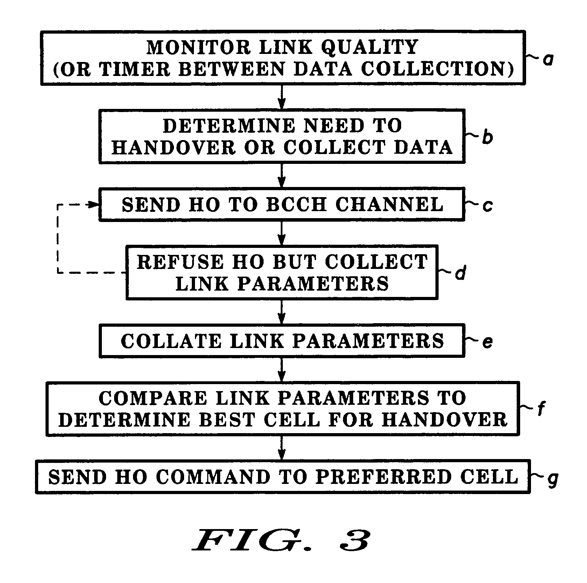

In this embodiment a clock 10 generates a signal periodically which is relayed to BTS 8 and results in a handover command transmitted over the DCH channel of mobile station 4. This is illustrated in step c of Figure 3 and the resulting operation is described below in connection with these Figures. The handover command is assumed to be received by a mobile station 4.

Before describing this embodiment in more detail, a variant will be described below with reference to Figure 2.

In this variant, the method is implemented at the call establishment stage. A user of a mobile station 4 decides to make a call and the mobile station requests a channel in a standard manner via the RACH (Random Access CHannel) on the simulcast BCCH carrier 11 - step A. This signal is received by the BTS 8 and in response an assignment command to a dedicated control channel (DCH) of one of the cells 2 within the area of the simulcast carrier 11 is generated - step B. This assignment command is received by the mobile station 4 which generates a channel access message. In accordance with a feature of the invention, all cells comprising the simulcast DCH are arranged to refuse the assignment and instead to make uplink measurements on the mobile station such as one or more of the following: signal strength (RX-LEV), radio link quality (RX-QUAL), angle of arrival, timing advance and delay spread.

Optionally, an assignment to a further cell can be made and steps B and C repeated.

Assuming more than one parameter is measured in this way, the parameters are collated (step D) and evaluated to determine a preferred cell 2 (step E). An assignment to this preferred cell is then transmitted both to the mobile station 4 and to this cell (step F) and the call is then established in a standard manner. According to the invention a number of measurements can thus be performed and thus information about the mobile station can be determined while not setting up a call. The call set up is unconditionally aborted and measurements are thus performed and information gathered without any requirement to subsequently set up a call.

Referring now to Figure 3, in this embodiment it is assumed that a call has been established, i.e. that a traffic channel (TCH) has been assigned between one of the cells 2 and the mobile station 4. In the arrangement shown in Figure 1, the serving cell will be the top right hand cell in which the mobile station 4 is located.

In response to for example a clock signal from clock 10, a decision is made to collect data - step b, and a handover command is sent to the mobile station 4 commanding it to send a handover access message to the dedicated control channel (DCH) on the simulcast carrier - step c.

This command is unconditionally refused i.e. the handover process will unconditionally be aborted and the mobile station will typically return to the traffic carrier previously used. However, the handover process results in the mobile station 4 transmitting on the simulcast carrier thereby allowing the neighbouring cells 2' to measure one or more uplink characteristics associated with the link between these cells and the mobile station as described above in connection with Figure 2. Accordingly, measurements of the mobile can be performed at all picocellular heads without changing the state of the system as the mobile station is automatically returned to the previous allocation. A characteristic of the received signal at the various picocellular heads is thus obtained. Steps c and d are optionally repeated either for the same mobile or for different mobiles.

According to a feature of the invention, the measured characteristics are collated by the network (step e) and compared to determine the best cell for handover (step f). When a handover is determined to be beneficial the optimum cell (that is prepared to accept a handover access from mobile station 4) is chosen and a handover process is initiated commanding the mobile station to handover to this cell (step g). This is acted upon, as in steps D to F of Figure 2.

A handover or call set-up process are specific examples of radio resource management processes but the invention is also applicable to other radio resource management processes. These include for example processes for change of operating mode, authentication requests or location update. Examples of radio resource management processes for the GSM system can be found in the GSM specification 04.08.

The determination of the need to collect data and initiate a radio resource management process according to the invention can be in response to for example
i) a change in signal quality, preferably when the signal quality falls below a threshold measurements in accordance with the invention are initiated to determine suitable handover candidates.
ii) a change in signal level, again preferably if the signal level falls below a threshold value.
iii) a change in timing advance. An increasing timing advance indicates that the mobile station is moving away from the base station and measurements are therefore initiated when the timing advance increases above a certain threshold.
iv) an angle of arrival. A change in the angle of arrival can indicate that the mobile is moving and therefore that new measurements are desirable to determine if a more suitable serving cell can be found.
v) a delay spread. Similarly, a change in delay spread can indicate a moving mobile station.
vi) reported mobile measurements. The mobile station will report the signal levels of the neighbouring serving cells and strong signals from neighbouring stations indicate that a handover may possibly be desirable and that measurements should be initiated to determine suitable candidates.
vii) a change in traffic levels. If the traffic in some cells increase drastically it may be advantageous to move some mobile stations to neighbouring cells if possible. Measurements according to the invention can be initiated to determine if this is possible.

The initiation of the radio resource management process can be performed in the fixed network in response to for example the above criteria. Alternatively it can be determined in the mobile station and a message can be transmitted to the fixed network starting the process.

Preferably, the characteristic of the signal transmitted is measured by the base stations and by all the picocellular heads. Alternatively, the signals can be measured by other mobile stations or by separate dedicated receivers.

The radio resource management process is preferably aborted by the fixed network following at least one radio resource message to the mobile station by transmitting the required messages to the involved base stations and by the base stations transmitting the required messages to the mobile stations. The messages required in GSM are defined in GSM specification 04.08. Alternatively, the process can be aborted by the mobile station.

It will be seen that the invention enables a greater amount of information to be obtained about radio signals in the network than in a conventional GSM network, and that this advantage is not dependent on the use of a simulcast system. In principle, such extra information could be obtained in a non-simulcast system or an umbrella system.

Although the invention has been described in the context of a GSM network, the invention is not limited to such a network but is also applicable to other cellular networks such as the Japanese PDC system and the North American NADC system for example.

## Claims

1. A method of evaluating a communications channel between a mobile station (4) and a base station (8) in a cellular mobile communication network, **characterized by** the steps of;
initiating, by a clock signal, a radio resource management process relating to the mobile station (4);
measuring a characteristic of a received signal from the mobile station (4) during the radio resource management process; and
unconditionally aborting the radio resource management process before the radio resource management process is completed.

2. A method as claimed in claim 1 wherein the radio resource management process is initiated by the fixed network.

3. A method as claimed in claim 1 wherein the radio resource management process is initiated by the mobile station (4).

4. A method as claimed in any preceding claim wherein a serving cell (2) is selected in dependence upon an evaluation of the characteristic.

5. A method as claimed in any of claims 1 to 3 wherein a channel assignment is made in dependence upon an evaluation of the characteristic.

6. A method as claimed in any of claims 1 to 5 wherein the radio resource management process is initiated in response to the radio conditions.

7. A method as claimed in claim 6 wherein the resource management process is initiated in response to one of the group of
i) a change in signal quality
ii) a change in signal level
iii) a change in timing advance
iv) an angle of arrival
v) a delay spread
vi) reported mobile measurements, and
vii) a change in traffic levels.

8. A method as claimed in any preceding claim wherein the characteristic of a received signal from the mobile station (4) is measured by one or more base stations (8).

9. A method as claimed in any of claims 1 to 8 wherein the characteristic of a received signal from the mobile station (4) is measured by one or more mobile stations.

10. A method as claimed in any preceding claim wherein the radio resource management process is aborted by the fixed network after at least one radio resource management message has been transmitted to the mobile station (4).

11. A method as claimed in any preceding claim wherein the radio resource management process is aborted by the mobile station (4) after at least one radio resource management message has been transmitted to the mobile station (4).

12. A method as claimed in any preceding claim wherein the characteristic is chosen from the group of:
i) signal strength,
ii) radio link quality,
iii) angle of arrival,
iv) timing advance and
v) delay spread.

13. A method as claimed in any preceding claim wherein the radio resource management process is chosen from the group of:
i) a handover
ii) a call setup
iii) a change of operating mode
iv) authentication request
v) location update.

14. A method as claimed in any preceding claim wherein the mobile communication network is a GSM network.

15. A method as claimed in any preceding claim wherein a simulcast carrier is transmitted over two or more cells.

16. A cellular mobile communication network comprising,
means for initiating, by a clock signal, a radio resource management process relating to a mobile station (4);
means for measuring a characteristic of a received signal from the mobile station (4) during the radio resource management process; and
means for unconditionally aborting the radio resource management process before the radio resource management process is completed.

17. A base station (8) comprising,
means for initiating, by a clock signal, a radio resource management process relating to a mobile station (4);
means for measuring a characteristic of a received signal from the mobile station (4) during the radio resource management process; and
means for unconditionally aborting the radio resource management process before the radio resource management process is completed.

## Patentansprüche

1. Verfahren zur Auswertung eines Kommunikationskanals zwischen einer mobilen Station (4) und einer Basisstation (8) in einem zellularen Mobilkommunikationsnetz, **gekennzeichnet durch** die folgenden Schritte:
Initiieren eines Funkressourcenmanagementprozesses betreffend die mobile Station (4) **durch** ein Taktsignal;
Messen einer Charakteristik eines empfangenen Signals von der mobilen Station (4) während des Funkressourcenmanagementprozesses; und
Bedienungsloses Abbrechen des Funkressourcenmanagementprozesses bevor der Funkressourcenmanagementprozess abgeschlossen wird.

2. Verfahren gemäß Anspruch 1, wobei der Funkressourcenmanagementprozess durch das Festnetz initiiert wird.

3. Verfahren gemäß Anspruch 1, wobei der Funkressourcenmanagementprozess durch die mobile Station (4) initiiert wird.

4. Verfahren gemäß einem der vorhergehenden Ansprüche, wobei eine bedienende Zelle (2) in Abhängigkeit von einer Auswertung der Charakteristik ausgewählt wird.

5. Verfahren gemäß einem der Ansprüche 1 bis 3, wobei eine Kanalzuordnung in Abhängigkeit von einer Auswertung der Charakteristik vorgenommen wird

6. Verfahren gemäß einem der vorhergehenden Ansprüche 1 bis 5, wobei der Funkressourcenmanagementprozess als Reaktion auf die Funkbedingungen initiiert wird.

7. Verfahren gemäß Anspruch 6, wobei der Funkressourcenmanagementprozess als Reaktion auf eine Größe aus der folgenden Gruppe initiiert wird:
i) einer Änderung einer Signalqualität,
ii) einer Änderung einer Signalstärke,
iii) einer Änderung einer Vorhaltezeit (timing advance),
iv) einem Einfallswinkel,
v) einer Verzögerung der Ausbreitung,
vi) gemeldeten mobilen Messungen und
vii) einer Änderung von Trafficleveln.

8. Verfahren gemäß einem der vorhergehenden Ansprüche, wobei die Charakteristik eines empfangenen Signals von der mobilen Station (4) durch eine oder mehrere Basisstationen (8) gemessen wird.

9. Verfahren gemäß einem der vorhergehenden Ansprüche 1 bis 8, wobei die Charakteristik eines empfangenen Signals von der mobilen Station (4) durch eine oder mehrere mobile Stationen gemessen wird.

10. Verfahren gemäß einem der vorhergehenden Ansprüche, wobei der Funkressourcenmanagementprozess durch das Festnetz abgebrochen wird, nachdem wenigstens eine Funkressourcenmanagementnachricht an die mobile Station (4) gesendet wurde.

11. Verfahren gemäß einem der vorhergehenden Ansprüche, wobei der Funkressourcenmanagementprozess durch die mobile Station (4) abgebrochen wird, nachdem wenigstens eine Funkressourcenmanagementnachricht an die mobile Station (4) gesendet wurde

12. Verfahren gemäß einem der vorhergehenden Ansprüche, wobei die Charakteristik aus der folgenden Gruppe ausgewählt Wird:
i) Signalstärke,
ii) Qualität der Funkverbindung,
iii) Einfallswinkel,
iv) Vorhaltezeit (timing advance) und
v) Verzögerung der Ausbreitung.

13. Verfahren gemäß einem der vorhergehenden Ansprüche, wobei der Funkressourcenmanagementprozess aus der folgenden Gruppe gewählt wird:
i) Übergabe
ii) Verbindungsaufbau
iii) Änderung der Betriebsart
iv) Authentifizierungsanfrage
v) Aktualisierung der Ortsangabe

14. Verfahren gemäß einem der vorhergehenden Ansprüche, wobei das Mobilkommunikationsnetz ein GSM-Netzwerk ist

15. Verfahren gemäß einem der vorhergehenden Ansprüche, wobei ein Simulcast Carrier über zwei oder mehr Zellen übertragen wird.

16. Zellulares Mobilkommunikationsnetz umfassend
Mittel zum Initiieren eines Funkressourcenmanagementprozesses betreffend eine mobile Station (4) durch ein Taktsignal;
Mittel zum Messen einer Charakteristik eines empfangenen Signals von der mobilen Station (4) während des Funkressourcenmanagementprozesses, und
Mittel zum bedienungslosen Abbrechen des Funkressourcenmanagementprozesses bevor der Funkressourcenmanagementprozess abgeschlossen wird

17. Basisstation (8) umfassend
Mittel zum Initiieren eines Funkressourcenmanagementprozesses betreffend eine mobile Station (4) durch ein Taktsignal;
Mittel zum Messen einer Charakteristik eines empfangenen Signals von der mobilen Station (4) während des Funkressourcenmanagementprozesses; und
Mittel zum bedienungslosen Abbrechen des Funkressourcenmanagementprozesses bevor der Funkressourcenmanagementprozess abgeschlossen wird.

## Revendications

1. Procédé d'évaluation d'un canal de communication entre une station mobile (4) et une station de base (8) dans un réseau de communication mobile cellulaire, **caractérisé par** les étapes suivantes :
démarrage, par un signal d'horloge, d'un procédé de gestion de ressources radio relatif à la station mobile (4) ;
mesure d'une caractéristique d'un signal reçu de la station mobile (4) pendant le procédé de gestion de ressources radio ; et
abandon sans condition du procédé de gestion des ressources radio avant que le procédé de gestion des ressources radio soit achevé.

2. Procédé selon la revendication 1, dans lequel le procédé de gestion des ressources radio est démarré par le réseau fixe.

3. Procédé selon la revendication 1, dans lequel le procédé de gestion des ressources radio est démarré par la station mobile (4).

4. Procédé selon l'une quelconque des revendications précédentes, dans lequel une cellule de desserte (2) est sélectionnée en fonction d'une évaluation de la caractéristique.

5. Procédé selon l'une quelconque des revendications 1 à 3, dans lequel une attribution de canal est effectuée en fonction d'une évaluation de la caractéristique.

6. Procédé selon l'une quelconque des revendications 1 à 5, dans lequel le procédé de gestion des ressources radio est démarré en réponse aux conditions radio.

7. Procédé selon la revendication 6, dans lequel le procédé de gestion des ressources est démarré en réponse à l'une des conditions du groupe suivant :
i) un changement de qualité du signal,
ii) un changement de niveau du signal,
iii) un changement d'avance de synchronisation,
iv) un angle d'arrivée.
v) un étalement du retard,
vi) des mesures mobiles rapportées, et
vii) un changement de niveaux de trafic.

8. Procédé selon l'une quelconque des revendications précédentes, dans lequel la caractéristique d'un signal reçu de la station mobile (4) est mesurée par une ou plusieurs stations de base (8).

9. Procédé selon l'une quelconque des revendications 1 à 8, dans lequel la caractéristique d'un signal reçu de la station mobile (4) est mesurée par une ou plusieurs stations mobiles.

10. Procédé selon l'une quelconque des revendications précédentes, dans lequel le procédé de gestion de ressources radio est abandonné par le réseau fixe après qu'au moins un message de gestion de ressources radio a été transmis à la station mobile (4).

11. Procédé selon l'une quelconque des revendications précédentes, dans lequel le procédé de gestion de ressources radio est abandonné par la station mobile (4) après qu'au moins un message de gestion de ressources radio a été transmis à la station mobile (4).

12. Procède selon l'une quelconque des revendications précédentes, dans lequel la caractéristique est choisie dans le groupe suivant :
i) l'intensité du signal,
ii) la qualité de la liaison radio,
iii) l'angle d'arrivée,
iv) l'avance de synchronisation, et
v) l'étalement du retard.

13. Procédé selon l'une quelconque des revendications précédentes, dans lequel le procédé de gestion de ressources radio est choisi dans le groupe suivant :
i) un transfert intercellulaire,
ii) un établissement de communication,
iii) un changement de mode de fonctionnement,
iv) une demande d'authentification
v) une mise à jour de localisation.

14. Procédé selon l'une quelconque des revendications précédentes, dans lequel le réseau de communication mobile est un réseau GSM.

15. Procédé selon l'une quelconque des revendications précédentes, dans lequel une porteuse de diffusion simultanée est transmise sur deux cellules ou plus.

16. Réseau de communication mobile cellulaire comprenant
des moyens pour le démarrage, par un signal d'horloge, d'un procédé de gestion de ressources radio relatif la station mobile (4) ;
des moyens pour la mesure d'une caractéristique d'un signal reçu de la station mobile (4) pendant le procédé de gestion de ressources radio ; et
des moyens pour l'abandon sans condition du procédé de gestion des ressources radio avant que le procédé de gestion des ressources radio soit achevé.

17. Station de base (8) comprenant
des moyens pour le démarrage, par un signal d'horloge, d'un procédé de gestion de ressources radio relatif à la station mobile (4) ;
des moyens pour la mesure d'une caractéristique d'un signal reçu de la station mobile (4) pendant le procédé de gestion de ressources radio ; et
des moyens pour l'abandon sans condition du procédé de gestion des ressources radio avant que le procédé de gestion des ressources radio soit achevé.
